# EUROPEAN PATENT SPECIFICATION

(11) **EP 2 693 266 B1**
(45) Date of publication and mention of the grant of the patent: **12.12.2018**
(21) Application number: 12765218.8
(22) Date of filing: 23.02.2012
(51) Int. Cl.: G03B 5/00, G03B 15/00, H04N 5/225, H04N 7/18, H04N 5/232

(54) **CONTROL SYSTEM FOR MONITOR CAMERA**
STEUERSYSTEM FÜR EINE ÜBERWACHUNGSKAMERA
SYSTÈME DE COMMANDE POUR CAMÉRA DE SURVEILLANCE

(30) Priority: 31.03.2011 JP 2011079259
(43) Date of publication of application: 05.02.2014
(73) Proprietor: FUJIFILM Corporation, Tokyo 106-8620 (JP)
(72) Inventor: OSAWA, Tsuyoshi, Saitama-shi, Saitama 331-9624 (JP)
(74) Representative: Klunker IP Patentanwälte PartG mbB
(86) International application number: PCT/JP2012/054393
(87) International publication number: WO 2012/132671

(56) References cited:
- JP-A- H10 213 832
- JP-A- 2002 237 982
- JP-A- 2006 337 778
- JP-A- 2007 114 486
- US-A- 5 845 156
- US-A- 6 035 134
- US-A1- 2001 028 516
- US-A1- 2004 136 068
- US-A1- 2007 188 620
- US-A1- 2010 110 192

## Description

### TECHNICAL FIELD

The present invention relates to a control system for a surveillance camera incorporating a vibration isolator that prevents shaking of an image due to vibration or the like.

### BACKGROUND ART

Recently, surveillance cameras, also referred to as CCTV (Closed-circuit Television) cameras, have been used for various purposes. For example, a camera for monitoring ships coming in and out from a mouth of a bay uses a zoom lens as an optical system. There is a zoom lens for a surveillance camera with a magnification ratio, between the magnification at a wide-angle end and the magnification at a telephoto end, of up to 50 to 60 times. The magnification at the wide-angle end is used to monitor a wide area such as the entire mouth of the bay. The magnification at the telephoto end is used to check the name or the country of an incoming ship. When a housing of a camera with a high magnification ratio shakes due to influence of a wind or the like during imaging on the telephoto side, the shaking is also magnified on an imaging surface. Thus, the image shake is likely to occur.

An image shake correction device disclosed in patent document 1 and patent document 2 is used to prevent the image shake. As for methods for preventing the image shake, there are an electronic correction method and a mechanical correction method. In the electronic correction method, image data from an image sensor is electronically processed in accordance with the shake of a camera housing. In the mechanical correction method, a correction lens and the like in an optical system is moved within a plane perpendicular to an optical axis to correct an optical path. A device according to the former method has a simple structure, but needs to omit a part of the image data to perform image shake correction. Hence, it is disadvantageous in taking a sharp image. On the other hand, a device according to the latter method has a complicated structure, but has a significant advantage in taking a sharp image. The devices according to the latter method are widely used in cameras for monitoring boundaries and the above-described mouths of bays, for example.

### PRIOR ART DOCUMENTS

### PATENT DOCUMENTS

PATENT DOCUMENT 1: Japanese Patent Laid-Open Publication No. 2010-237251
PATENT DOCUMENT 2: Japanese Patent Laid-Open Publication No. 9-80531

Document US 2010/0110192 describes a mobile pan and tilt camera which is to be mounted on a vehicle. The camera system includes a display which can be viewed by an operator sitting in the vehicle so that the camera can be panned and tilted according to the operation carried out by the operator.

### SUMMARY OF THE INVENTION

### Problems to be Solved by the Invention

The risk of failure of the image shake correction device according to the mechanical correction method is far greater than that of the image shake correction device according to the electronic method because the image shake correction device according to the mechanical correction method comprises mechanically movable parts. For example, when a drive actuator goes out of control due to oscillations or the like, an element for correction that moves slightly within a predetermined stroke range is pressed against a stroke end. As a result, the image quality largely deteriorates. The surveillance camera is required to continue the imaging as much as possible without interruption. Even if a part of its functions is impaired by failure, the surveillance camera is required to continue the monitoring and the recording of images in a feasible manner until a support service for repair is provided.

In view of the foregoing, an object of the present invention is to provide a control system for a surveillance camera, with an image shake correction device, capable of continuing monitoring and recording of images with the use of remaining functions in case of a serious failure or anomaly, which requires repair by an expert, including failure of the image shake correction device of the surveillance camera.

### Means for Solving the Problems

In order to achieve the above and other objects, a surveillance camera system according to claim 1 and the dependent claims is proposed.

### Effect of the Invention

According to the present invention, the correction element for the image shake correction is automatically centered on and fixed to the optical axis of the imaging optical system when an anomaly which requires the support service occurs and an operation for handling the anomaly is performed. Hence, the surveillance camera can basically continue monitoring and recording of images before the support service is performed. An accidental interruption of monitoring is prevented.

### BRIEF DESCRIPTION OF DRAWINGS

Fig. 1 is an external view of a surveillance camera of the present invention.
Fig. 2 is a block diagram illustrating an outline of a control system of the surveillance camera of the present invention.
Fig. 3 is a perspective view illustrating an outline of an image shake correction device.
Fig. 4 is a schematic view illustrating an example of a locking device of an image shake correction element.
Fig. 5 is a flowchart illustrating an operation of the present invention.
Fig. 6 is an explanatory view illustrating an example of a monitor display screen during normal times.
Fig. 7 is an explanatory view illustrating an example of a monitor display screen at the time of an error.
Fig. 8 is an explanatory view illustrating an example of a monitor display screen after a contact to a support service has been made.

### MODE FOR CARRYING OUT THE INVENTION

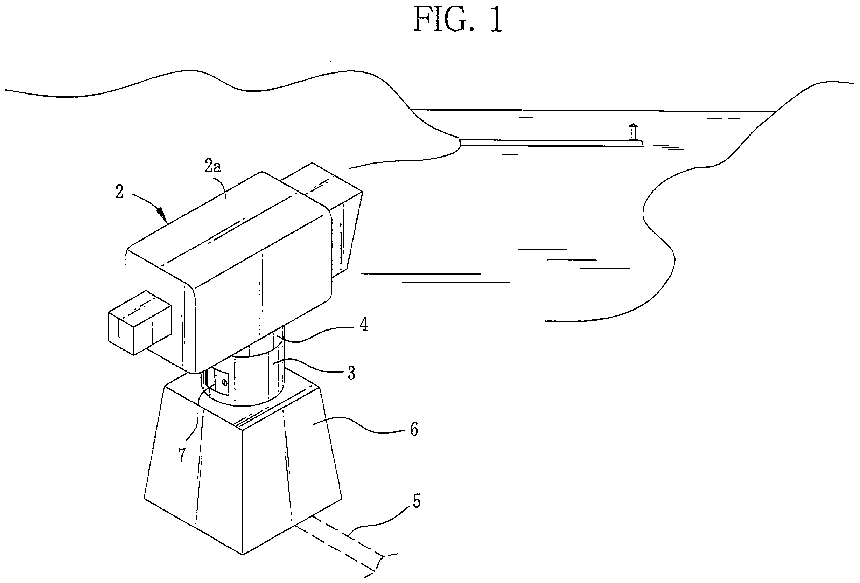

As shown in Fig. 1, a surveillance camera 2 according to the present invention is placed on a mount 3. The surveillance camera 2 is used for monitoring a mouth of a bay. Basically, the surveillance camera 2 is used for fixed point monitoring. An imaging optical axis is preset to be directed toward a predetermined monitoring point. The surveillance camera 2 is set on a pan and tilt mechanism 4. The surveillance camera 2 can change its orientation within a limited range of 3 to 5°, for example.

A housing 2a incorporates a power supply circuit, an imaging optical system, a control circuit for the imaging optical system, and the like. A camera unit is connected in the rear end of the housing 2a. The camera unit incorporates a solid state image sensor such as a CMOS sensor or a CCD image sensor and a driver circuit for the solid state image sensor. Power used for driving this is supplied to the power supply circuit through an underground cable 5 and a cord routed through a support 6, the mount 3, and the pan and tilt mechanism 4 to the power supply circuit.

The mount 3 is provided with a door 7 with a locking key. When the door 7 is open, a power on/off switch for turning the surveillance camera 2 on/off, an emergency contact button, and the like appear. The emergency contact button is operated when a support service is necessary due to serious failure or error. It is preferable to accommodate a wireless communicator inside the door 7 so that a user can contact a control room. The control room operates the surveillance camera 2. Images transmitted from the surveillance camera 2 are observed and stored in the control room.

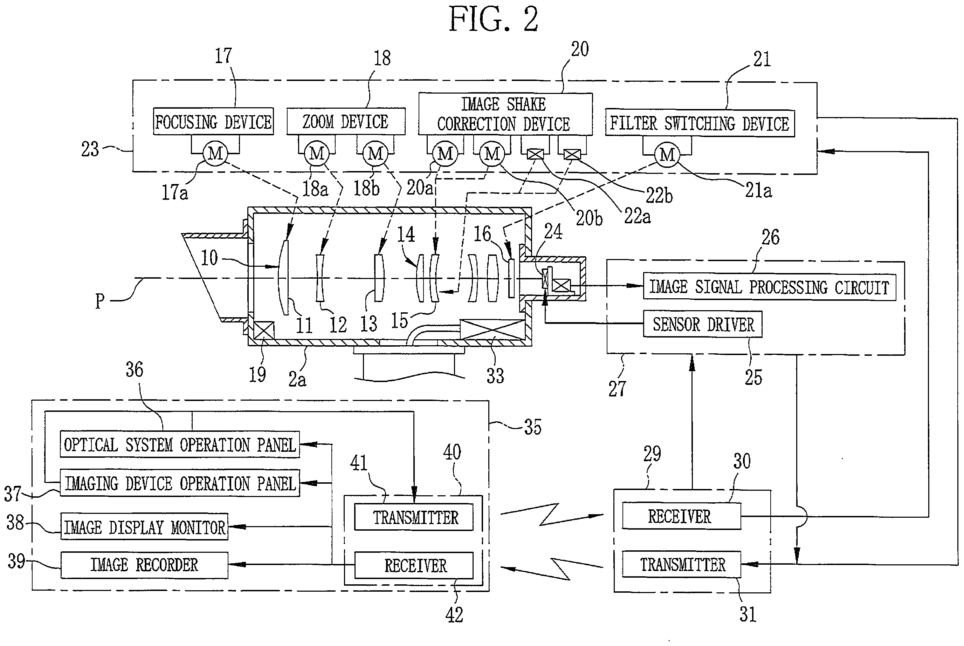

A functional block diagram in Fig. 2 illustrates a basic electrical configuration of the above-described surveillance camera 2 and a schematic electrical configuration on the control room side. The control room is provided with a device for remotely controlling the surveillance camera 2 or receiving an image signal from the surveillance camera 2. The housing 2a incorporates an imaging optical system 10 having a magnification function. The imaging optical system 10 comprises a focus lens 11, a magnification lens 12, a compensator lens 13, and a relay lens 14, in this order from an object side. A correction lens 15, being an element for image shake correction, is included in the relay lens 14. A filter 16 is provided behind the relay lens 14. The filter 16 is inserted, removed, and switched using a turret method.

The housing 2a incorporates an optical system circuit unit 23 for controlling the operation of the imaging optical system 10. The optical system circuit unit 23 comprises a focusing device 17, a magnification device 18, a gyro sensor 19, an image shake correction device 20, and a filter switching device 21, each provided with an actuator. A motor 17a moves the focus lens 11 in a direction of an optical axis P. Motors 18a and 18b move the magnification lens 12 and the compensator lens 13, respectively, in the direction of the optical axis P. Note that the magnification lens 12 and the compensator lens 13 can be moved separately from each other in the optical axis direction with the use of their respective cam grooves formed in a cam barrel for magnification. The motor 18b is omitted when the cam barrel is rotated by the motor 18a. Each of the above-described focusing operation and the magnification operation is performed by manual input from an optical system operation panel 36 provided in the control room, which will be described below.

The image shake correction device 20 is provided with a pair of voice coil motors 20a and 20b and a pair of solenoids 22a and 22b. The voice coil motors 20a and 20b move the correction lens 15 within a plane perpendicular to the optical axis 11. Preferably, a moving direction of the correction lens 15 moved by the voice coil motor 20a is orthogonal to that of the correction lens 15 moved by the voice coil motor 20b. The motors 20a and 20b are driven in accordance with an image shake signal that corresponds to the shake of the housing 2a and is obtained from the gyro sensor 19. Thereby the correction lens 15 is moved within the plane perpendicular to the optical axis 11 so as to correct the image shake. The pair of solenoids 22a and 22b are used to switch between a state in which the correction lens 15 is moved to correct the image shake and a state in which the center of the correction lens 15 is positioned to coincide with the optical axis 11 and the correction lens 15 is locked into that position.

An image sensor 24 having sensitivity in a range including an infrared region can be used in the daytime by driving a motor 21a of the filter switching device 21 to insert an infrared cut filter as the filter 16 in an imaging optical path as illustrated by way of example. When the infrared cut filter is removed from the imaging optical path, the same image sensor 24 can be used for monitoring at night, using infrared light. When a polarizing filter is used as the filter 16, light reflected from the surface of the sea is removed during the daytime monitoring on a fine day, and thereby sharpness of a monitor image is improved.

A sensor driver 25 and an image signal processing circuit 26 are incorporated as an imaging system circuit unit 27 in the housing 2a. The sensor driver 25 drives the image sensor 24. The image signal processing circuit 26 performs various signal processes on an image signal obtained from the image sensor 24. The optical system circuit unit 23 and the imaging system circuit unit 27 are electrically connected to a camera-side communicator 29. The camera-side communicator 29 has a receiver 29 and a transmitter 30. The camera-side communicator 31 is also accommodated in the housing 2a. A power supply circuit 33, incorporated in the housing 2a, supplies power to the camera-side communicator 29, the optical system circuit unit 23, and the imaging system circuit unit 27.

The control room is located remote from the surveillance camera 2. The operation of the surveillance camera 2 is controlled through the control room. Images produced based on the image signals from the surveillance camera 2 are monitored and recorded in the control room. A control system unit 35, used in the control room, includes the optical system operation panel 36, an imaging device operation panel 37, an image display monitor 38, and an image recorder 39. The optical system operation panel 36 is used for input operation to control the operation of the optical system circuit unit 23. The imaging device operation panel 37 is used for input operation to control the operation of the imaging system circuit unit 27. The image display monitor 38 displays the monitor images based on the image signals from the surveillance camera 2. The image recorder 39 records the image data. The optical system operation panel 36, the imaging device operation panel 37, the image display monitor 38, and the image recorder 39 are electrically connected to a transmitter 41 and a receiver 42. The transmitter 41 and the receiver 42 constitute an external-side communicator 40.

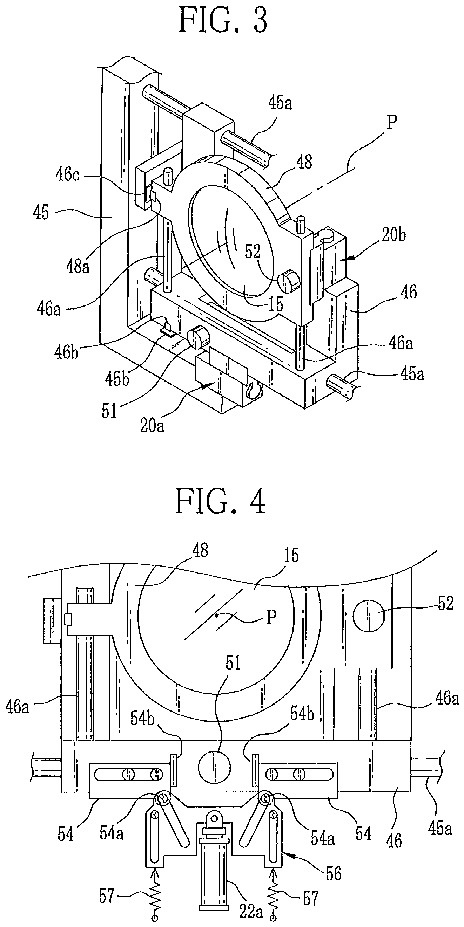

Fig. 3 illustrates an example of a support structure of the correction lens 15. A pair of horizontally extending guide shafts 45a is fixed to a support frame 45. The support frame 45 is fixed to a barrel structure (not shown) of the imaging optical system 10. The guide shafts 45a support a slide frame 46 such that the slide frame 46 is movable in a horizontal direction. The slide frame 46 is operationally connected to the voice coil motor 20a provided on the fixed support frame 45. An amount of movement of the slide frame 46 in the horizontal direction and its moving speed are determined in accordance with the drive of the voice coil motor 20a. A permanent magnet 46b is fixed to the slide frame 46. A Hall element 45b is provided in an opposing position on the support frame 45. A position of the slide frame 46 in the horizontal direction is detected by monitoring a signal from the Hall element 45b.

A pair of perpendicularly extending guide shafts 46a is disposed on the slide frame 46. The guide shafts 46a support a lens frame 48 such that the lens frame 48 is movable in a perpendicular direction. The lens frame 48 is operationally connected to the voice coil motor 20b fixed to the slide frame 46. An amount of movement of the lens frame 48 in the perpendicular direction and its moving speed are determined in accordance with the drive of the voice coil motor 20b. The position of the lens frame 48 in the perpendicular direction is detected with the use of a permanent magnet 48a fixed to the lens frame 48 and a Hall element 46c provided on the slide frame 46. Note that, instead of the Hall elements 45b and 46c, a PSD (Position Sensitive Device) may be used to improve accuracy of the positional detection. The PSD detects light from a light emitting element such as an LED fixed to each of the slide frame 46 and the lens frame 48. Thereby, the position of each of the slide frame 46 and the lens frame 48 is identified.

The correction lens 15 for image shake correction is fixed to the lens frame 48. By controlling the drive of the voice coil motors 20a and 20b, the correction lens 15 is moved in any desired direction within the plane perpendicular to the optical axis P. Hence, by controlling the drive of the voice coil motors 20a and 20b in accordance with the shake signal detected by the gyro sensor 19, the correction lens 15 is shifted to correct the shake. The image shake on a photoelectric surface of the image sensor 24 is prevented by utilizing refraction of light rays caused by the shifting of the correction lens 15.

Magnification information of the imaging optical system 10 needs to be taken into consideration to control the drive of the voice coil motors 20a and 20b. A well-known means such as an encoder is used to read positional information of the magnification lens 12. The positional information is inputted to the image shake correction device 20. An actuator for moving the correction lens 15 is not limited to the voice coil motor. For example, a piezoelectric element may be used.

Fig. 4 illustrates an example of a locking device that centers the correction lens 15 on the optical axis 11 and fixes the correction lens 15 in a centering position. A pin 51, protruding toward the front, is provided on a front face of the slide frame 46. A pin 52, protruding toward the front, is provided on a front face of the lens frame 48. The pin 51 is fixed in a position in which the center of the pin 51 is within a vertical plane crossing the optical axis P. The pin 52 is fixed in a position in which the center of the pin 52 is within a horizontal plane crossing the optical axis P. The pin 51 moves in the horizontal direction along with the slide frame 46. A pair of stop plates 54 and 54 is provided so as to form a space between them. The space is wider than a predetermined maximum travel stroke.

The stop plates 54 and 54 are provided with upright pieces 54b and 54b, respectively. The upright pieces 54b and 54b face each other. As illustrated in the drawing, a horizontally extending guide slot is formed on each of the stop plates 54 and 54. Guide pins, each fixed to a barrel structure portion, engage with the respective guide slots, so that the stop plates 54 and 54 are movable in the horizontal direction separately from the slide frame 46. Control pins 54a are implanted in the respective stop plates 54 and 54. The control pins 54a engage with respective cam grooves 56a. The each cam groove 56a has a V-shape and formed in a control plate 56 that is guided to move in the perpendicular direction. The pair of V-shaped cam grooves 56 are symmetrical relative to a vertical plane including the optical axis P.

In the illustrated state, the solenoid 22a of the image shake correction device 20 is turned on to pull down the control plate 56 against biasing of a spring 57. Thereby, a sufficient space is secured between the upright pieces 54b and 54b of the stop plates 54 and 54, allowing the pin 51 to move along with the slide frame 46 in the horizontal direction. To center and fix the correction lens 15 on the optical axis 11 at the occurrence of an abnormal signal, the supply of power to the solenoid 22a is stopped. When the supply of power to the solenoid 22a is stopped, the control plate 56 goes up due to the biasing of the spring 57. Due to operation of the cam grooves 56a, the pair of stop plates 54 and 54 moves horizontally in a direction to come closer to each other through the control pins 54a.

When the upright pieces 54b and 54b of the respective stop plates 54 and 54 come close to each other, the pin 51 is pressed toward the center by one of the upright pieces 54b regardless of the position of the pin 51 in the horizontal direction. Eventually, the pin 51 is held and fixed between the upright pieces 54b and 54b. When fixed, the pin 51 is located immediately below the optical axis P. The pair of stop plates 54 and 54 and a mechanism to move the stop plates 54 and 54 in the horizontal direction constitute a locking device of the horizontal direction. The locking device of the horizontal direction centers the correction lens 15 on the optical axis 11 and locks the correction lens 15 to the optical axis 11 in the horizontal direction.

The pin 51 of the slide frame 46 is provided in a position within a vertical plane crossing the optical axis P. The pin 52 on the lens frame 48 differs from the pin 51 only in that the pin 52 is located within a horizontal plane crossing the optical axis P. Hence, when the above-described locking device of the horizontal direction is rotated 90° in the counter-clockwise direction and the pair of stop plates moves in the perpendicular direction relative to the barrel structure portion, it is used as the locking device of the perpendicular direction. In the locking device of the perpendicular direction, the control plates are moved in the horizontal direction to move the pair of stop plates in the perpendicular direction. The pin 52 is located between the upright pieces integrated with the respective stop plates. Eventually, the pin 52 is positioned and fixed in a position within the horizontal plane crossing the optical axis P.

Note that, in the above-described structure, when the slide frame 46 moves in the horizontal direction such that the pin 51 is located away from the immediate underneath of the optical axis P, the pin 52 may be located outside of moving paths of the pair of upright pieces provided integrally with the stop plates of the locking device of the perpendicular direction. In this case, the pin 52 cannot be located between the pair of upright pieces only by operating the locking device of the perpendicular direction. To prevent this, the pair of upright pieces for positioning the pin 52 in the perpendicular direction is extended sufficiently relative to a moving range of the slide frame 46 in the horizontal direction. When a centering process is performed, first, the pin 51 is used to position the slide frame 46 in the horizontal direction. Next, the pin 52 is used to position the lens frame 48 in the perpendicular direction. As for the lock mechanism of the lens frame 48 in the perpendicular direction using the pin 52, the lock mechanism illustrated in Fig. 4 may be rotated 90° in the counter-clockwise direction and attached not to the barrel structure portion but to the slide frame 46.

When the pins 51 and 52 are positioned as described above, the correction lens 15 with the lens frame 48 is centered on the optical axis P such that the center of the correction lens 15 coincides with the optical axis P, and the correction lens 15 is mechanically fixed in that position. Note that the actuator of the locking device is not limited to the solenoid. A motor or the like may be used as the actuator of the locking device. The centering of the pins 51 and 52 may be performed by supplying the power to the actuator(s). However, it is advantageous that the center of the correction lens 15 is located on and locked to the optical axis by stopping the supply of power to the actuator (s) in consideration of an unforeseen situation such as failure or anomaly of the power supply circuit 33 or an outage.

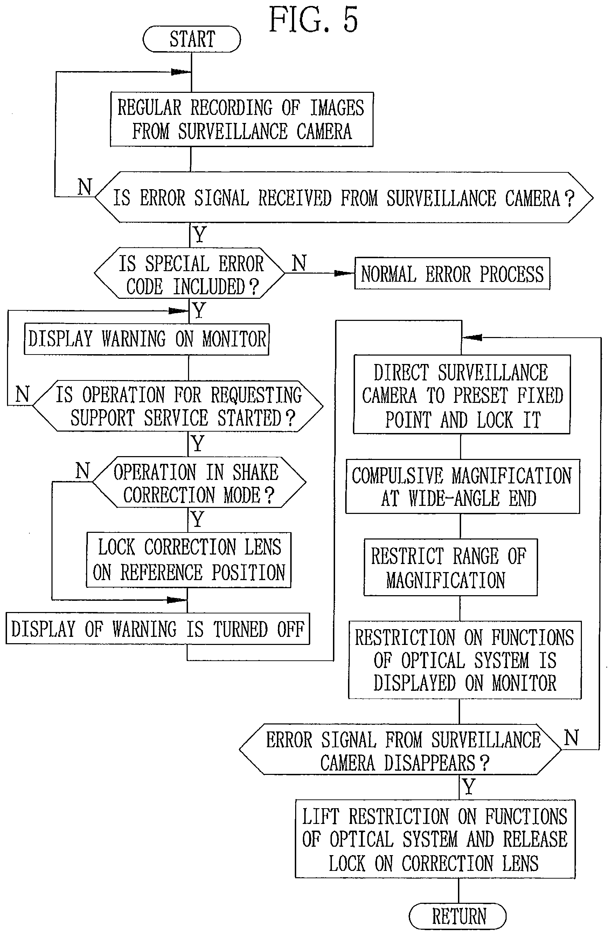

Referring to a flowchart in Fig. 5, an operation of a control system for the above-described surveillance camera is described. During normal monitoring, the surveillance camera 2 is controlled as desired by a command from the control room. Basically, the surveillance camera 2 is used for the fixed point monitoring. The orientation of the surveillance camera 2 is preset toward the head of a pier in the mouth of the bay, for example. When a command for the fixed point monitoring is inputted from the optical system operation panel 36, the mount 3 of the surveillance camera 2 is controlled through the transmitter 41 of the control room and the receiver 30 on the camera-side such that the predetermined fixed point is located at the center of a screen.

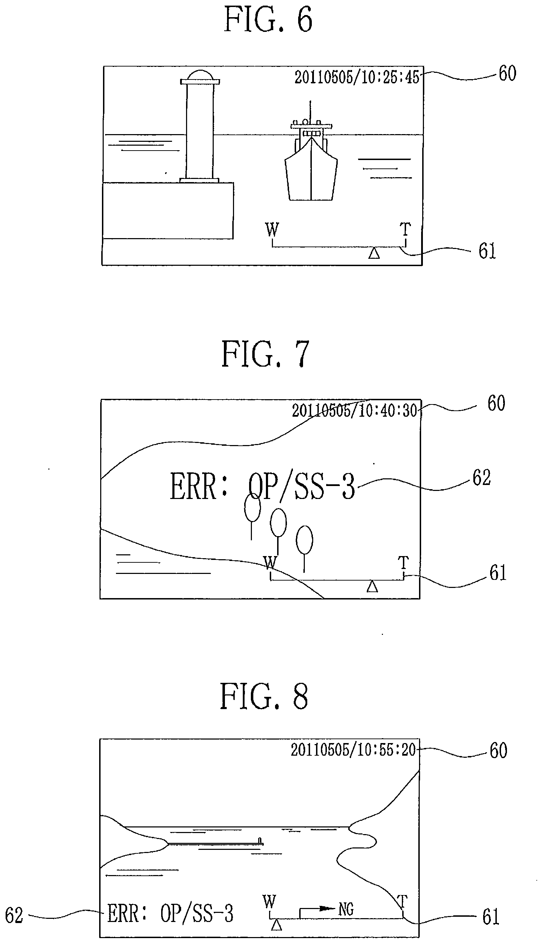

Panning and tilting are performed within limited ranges. Magnification of the imaging optical system 10 is changed through input operation from the optical system operation panel 36. Fig. 6 illustrates an example of an image taken with the surveillance camera 2 and displayed on the image display monitor 38 of the control room. The image is taken with the imaging optical system 10 with the magnification on the telephoto side. Date and time data 60 and a magnification scale 61 are displayed together with the image on the monitor screen. These images are recorded by the image recorder 39 as necessary or constantly.

When an anomaly occurs in the surveillance camera 2, an error check function in the surveillance camera works and the camera-side transmitter 31 transmits an error signal. The error signal includes an error code identifying the type of the error. The receiver 42 receives the error signal together with an image signal from the surveillance camera 2. As shown in Fig. 7, the image display monitor 38 in the control room displays an error code 62.

In this example, an abnormal operation error of the imaging optical system 10 has caused. The error code includes a special code "SS", denoting that the support service is necessary. In this case, a warning, in which the error code 62 expressed in capital letters blinks at the center of the monitor screen, is displayed. This error represents, for example, an abnormal operation of the image shake correction device 20 and corresponds to an error which results in a major damage to a drive system of the correction lens 15 if the image shake correction device 20 is used continuously without repair and the repair of which is anticipated to be extremely difficult. Note that, in the case of a normal error not including the special code, a normal maintenance operation is performed while the surveillance camera 2 is used continuously.

When a warning illustrated in Fig. 7 is displayed, an operator in the control room checks the warning and operates an emergency contact button on the optical system operation panel 36. When necessary, the operator directly contacts the support service department through a wireless communicator or the like. When the emergency contact button is operated, a lock signal is transmitted from the optical system operation panel 36 to the transmitter 41. The camera-side receiver 30 receives the lock signal. The lock signal is transmitted to the optical system circuit unit 23. A locking process of the correction lens 15 is performed when the imaging optical system 10 is used in an image shake correction mode. Note that, when the imaging optical system 10 is not used in the image shake correction mode, the solenoids 22a and 22b are in an OFF state. Namely, the correction lens 15 remains fixed on the optical axis, so that there is no problem.

The locking process is performed by stopping the supply of power to the pair of solenoids 22a and 22b of the image shake correction device 20. The correction lens 15 is centered on the optical axis P and fixed in that position. Concurrently with the locking process, the imaging optical system 10 is automatically set to the wide-angle end if the imaging optical system 10 has been set to the telephoto side. As for the imaging optical system 10 with normal magnification function of 50 to 60 times, its magnifiable range is restricted to approximately 5 times from the wide-angle end. The image display monitor 38 displays a display illustrated in Fig. 8. Each of the circumstances such as "the occurrence of error with the special code", "the contact to the support service has been made", and "the restriction on the magnification function" is understood correctly.

As described above, a special code is provided in advance for an urgent error that needs to be repaired immediately. When such error occurs, the control room responds to it immediately. When the contact to the support service is made through the optical system operation panel 36 to handle the error, the lock signal is automatically transmitted to the transmitter 41 and the correction lens 15 for the image shake correction is automatically returned and locked in the centering position on the optical axis. After that, without being aware of such complicated operation, the user can continue the monitoring while utilizing basic functions required for the surveillance camera 2 for the fixed point monitoring. Although the image shake correction device 20 cannot be used, a large or apparent image shake is not likely to occur because the magnification of the imaging optical system 10 is changed to that on the wide-angle end side. If an image with high image magnification is necessary, a substantially sharp image is obtained by enlarging the image using image processing.

Note that, a trigger for the locking process of the correction lens 15 is not limited to the above-described operation of the emergency contact button of the optical system operation panel 36 in the control room. For example, a commonly used mobile phone may be used to contact the support service. The locking process of the correction lens 15 can be initiated automatically by receiving a radio signal produced by operating the mobile phone. It is effective to provide the emergency contact button inside the door 7 of the mount 3 because a user visiting the surveillance camera may find a trouble which needs the support service. The pressing operation of the emergency contact button is transmitted to the control room through the camera-side communicator 29 and the external-side communicator 40. Thereby a similar sequencing process is performed. The emergency contact button inside the door 7 of the mount 3 may have a function equivalent to that of the emergency contact button of the optical system operation panel 36.

### DESCRIPTION OF THE REFERENCE NUMERALS

2 surveillance camera
10 imaging optical system
15 correction lens
20 image shake correction device
23 optical system circuit unit
27 imaging system circuit unit
35 control system circuit unit
29 camera-side communication means
40 external-side communication means
46 slide frame
48 lens frame
56 control plate

## Claims

1. A surveillance camera system having a control system, comprising:
a surveillance camera (2) having a housing (2a) and comprising an image shake correction device (20) to correct an image shake,
a pan and tilt mechanism (4) for changing an orientation of the surveillance camera supported by a mount (3);
a camera-side communicator incorporated in the housing (2a), the camera-side communicator receiving a signal from outside of the housing; and
an external-side communicator (40) for transmitting a signal to the camera-side communicator from outside, remote from the surveillance camera,
**characterized in that**
the image shake correction device is adapted to move a correction element (15), in accordance with vibration on the housing (2a), the correction element being included in a part of an imaging optical system (10);
a locking device (54, 54a, 56, 56a, 57) is incorporated in the housing, the locking device configured for centering and fixing the correction element (15) on an imaging optical axis, in response to a lock signal transmitted by said external-side communicator and received by the camera-side communicator; and
the external-side communicator is adapted to transmit a signal for fixing the surveillance camera toward a preset fixed point direction, if the orientation of the surveillance camera is in a direction other than the fixed point direction when a lock signal that causes the locking device to operate is received.

2. The control system for a surveillance camera according to claim 1, wherein the camera-side communicator receives a control signal, transmitted from the external-side communicator, for controlling operation of the surveillance camera and transmits an image signal, obtained from the surveillance camera, and an operation signal, pertaining to operation of the imaging optical system, to the external-side communicator, and
the external-side communicator transmits the control signal to the camera-side communicator and outputs the received image signal to a recording device (39).

3. The control system for a surveillance camera according to claim 2, wherein the external-side communicator is provided along with an operation panel (36) for operating the surveillance camera and the imaging optical system, and an operation range of the imaging optical system, operable through the operation panel, is restricted when the lock signal is transmitted.

4. The control system for a surveillance camera according to claim 3, wherein a magnifiable range of the imaging optical system is restricted to a predetermined range on a wide-angle side when the lock signal is transmitted.

5. The control system for a surveillance camera according to one of claims 1 to 4, wherein when power is supplied, the locking device releases a lock on the correction element to allow the correction element to perform image shake correction, and the locking device centers the correction element and fixes the correction element in a centering position when supply of the power is stopped.

## Patentansprüche

1. Überwachungskamerasystem mit einem Steuersystem, umfassend:
eine Überwachungskamera (2) mit einem Gehäuse (2a) und enthaltend eine Wackelkorrektureinrichtung (20) zum Korrigieren eines Bildwackelns,
einen Schwenk- und Kippmechanismus (4) zum Ändern einer Orientierung der Überwachungskamera, die von einer Halterung (3) getragen wird;
einen kameraseitigen Kommunikator, der in das Gehäuse (2a) inkorporiert ist und von außerhalb des Gehäuses ein Signal empfängt; und
einen externen Kommunikator (40) zum Senden eines Signals an dem kameraseitigen Kommunikator von außen und entfernt von der Überwachungskamera,
**dadurch gekennzeichnet, dass**
die Bildwackel-Korrektureinrichtung dazu ausgebildet ist, ein Korrekturelement (15) nach Maßgabe einer Vibration des Gehäuses (2a) zu bewegen, wobei das Korrekturelement in einem Teil einer Abbildungsoptik (10) enthalten ist;
eine Sperreinrichtung (54, 54a, 56, 56a, 57) in das Gehäuse inkorporiert ist, und konfiguriert ist zum Zentrieren und Fixieren des Korrekturelements (15) auf eine optische Abbildungsachse, ansprechend auf ein von dem externen Kommunikator gesendetes und von dem kameraseitigen Kommunikator empfangenes Sperrsignal; und
wobei der externe Kommunikator dazu ausgebildet ist, ein Signal zum Fixieren der Überwachungskamera in Richtung einer voreingestellten Fixpunktrichtung zu senden, wenn die Orientierung der Überwachungskamera eine von der Fixpunktrichtung verschiedene Richtung ist, wenn ein Sperrsignal empfangen wird, welches die Sperreinrichtung zu einer Aktion veranlasst.

2. Steuersystem für eine Überwachungskamera nach Anspruch 1, bei dem der kameraseitige Kommunikator ein Steuersignal empfängt, das von dem externen Kommunikator gesendet wurde, um eine Aktion der Überwachungskamera zu steuern, und ein von der Überwachungskamera erhaltenes Bildsignal sowie ein Betriebssignal, das zu dem Betrieb der Abbildungsoptik gehört, an den externen Kommunikator sendet, und
der externe Kommunikator das Steuersignal an den kameraseitigen Kommunikator sendet und das empfange Bildsignal an ein Aufzeichnungsgerät (39) ausgibt.

3. Steuersystem für eine Überwachungskamera nach Anspruch 2, bei dem der externe Kommunikator an einem Bedienfeld (36) zum Bedienen der Überwachungskamera und der Abbildungsoptik vorgesehen ist, und ein Arbeitsbereich der Abbildungsoptik, der über das Bedienfeld betreibbar ist, eingeschränkt ist, wenn das Sperrsignal gesendet wird.

4. Steuersystem für eine Überwachungskamera nach Anspruch 3, bei dem ein vergrößerbarer Bereich der Abbildungsoptik auf einen vorbestimmten Bereich auf einer Weitwinkelseite beschränkt wird, wenn das Sperrsignal gesendet wird.

5. Steuersystem für eine Überwachungskamera nach einem der Ansprüche 1 bis 4, bei dem bei Zufuhr von Energie die Sperreinrichtung eine Sperrung des Korrekturelements freigibt, damit das Korrekturelement eine Bildwackelkorrektur ausführen kann, und die Sperreinrichtung das Korrekturelement zentriert und das Korrekturelement in einer Zentrierposition fixiert, wenn die Energiezufuhr beendet wird.

## Revendications

1. Système pour caméra de surveillance présentant un système de commande, comprenant :
une caméra de surveillance (2) présentant un logement (2a) et comprenant un dispositif de correction de vibration d'image (20) pour corriger une vibration d'image ;
un mécanisme pour panoramique horizontal/vertical (4) pour modifier une orientation de la caméra de surveillance supportée par une monture (3) ;
un appareil de communication côté caméra intégré dans le logement (2a), l'appareil de communication côté caméra recevant un signal depuis l'extérieur du logement, et
un appareil de communication côté externe (40) pour transmettre un signal à l'appareil de communication côté caméra à partir de l'extérieur, à distance de la caméra de surveillance ;
**caractérisé en ce que**
le dispositif de correction de vibration d'image est apte à déplacer un élément de correction (15), conformément à des vibrations sur le logement (2a), l'élément de correction étant inclus dans une partie d'un système optique d'imagerie (10) ;
un dispositif de verrouillage (54, 54a, 56, 56a, 57) est intégré dans le logement, le dispositif de verrouillage étant configuré pour centrer et fixer l'élément de correction (15) sur un axe optique d'imagerie, en réaction à un signal de verrouillage transmis par ledit appareil de communication côté externe et reçu par l'appareil de communication côté caméra, et
l'appareil de communication côté externe est apte à transmettre un signal pour fixer la caméra de surveillance vers une direction de point fixe préréglée, si l'orientation de la caméra de surveillance est dans une direction autre que la direction de point fixe lors de la réception d'un signal de verrouillage qui entraîne le fonctionnement du dispositif de verrouillage.

2. Système de commande pour une caméra de surveillance selon la revendication 1, dans lequel l'appareil de communication côté caméra reçoit un signal de commande, transmis à partir de l'appareil de communication côté externe, pour commander le fonctionnement de la caméra de surveillance et transmet un signal d'image, obtenu à partir de la caméra de surveillance, et un signal de fonctionnement, appartenant au fonctionnement du système optique d'imagerie, à l'appareil de communication côté externe, et
l'appareil de communication côté externe transmet le signal de commande à l'appareil de communication côté caméra, et émet le signal d'image reçu vers un dispositif d'enregistrement (39).

3. Système de commande pour une caméra de surveillance selon la revendication 2, dans lequel l'appareil de communication côté externe est prévu le long d'un panneau de commande (36) pour faire fonctionner la caméra de surveillance et le système optique d'imagerie, et une plage de fonctionnement du système optique d'imagerie, pouvant fonctionner par le biais du panneau de commande, est restreinte lorsque le signal de verrouillage est transmis.

4. Système de commande pour une caméra de surveillance selon la revendication 3, dans lequel une plage pouvant être grossie du système optique d'imagerie est restreinte à une plage prédéterminée sur un côté grand-angulaire lorsque le signal de verrouillage est transmis.

5. Système de commande pour une caméra de surveillance selon l'une quelconque des revendications 1 à 4, dans lequel lorsqu'une alimentation électrique est fournie, le dispositif de verrouillage relâche un verrou sur l'élément de correction afin de permettre à l'élément de correction d'exécuter une correction de vibration d'image, et le dispositif de verrouillage centre l'élément de correction et fixe l'élément de correction dans une position de centrage lorsque l'alimentation électrique est stoppée.
